# EUROPÄISCHE PATENTSCHRIFT

(11) **EP 2 622 323 B1**
(45) Veröffentlichungstag und Bekanntmachung des Hinweises auf die Patenterteilung: **25.01.2017**
(21) Anmeldenummer: 11769828.2
(22) Anmeldetag: 30.09.2011
(51) Int. Cl.: G01N 21/47, G01J 1/04, G01J 3/02, G01J 3/28

(54) **VORRICHTUNG ZUR SPEKTROSKOPISCHEN UNTERSUCHUNG VON PROBEN**
APPARATUS FOR SPECTROSCOPICALLY EXAMINING SAMPLES
DISPOSITIF D'ANALYSE SPECTROSCOPIQUE D'ÉCHANTILLONS

(30) Priorität: 30.09.2010 DE 102010041749
(43) Veröffentlichungstag der Anmeldung: 07.08.2013
(73) Patentinhaber: Carl Zeiss Spectroscopy GmbH, 07745 Jena (DE)
(72) Erfinder: MARGRAF, Jörg, 07426 Königsee-Rottenbach (DE); CORRENS, Nico, 99425 Weimar (DE)
(74) Vertreter: Sticht, Andreas
(86) Internationale Anmeldenummer: PCT/EP2011/067100
(87) Internationale Veröffentlichungsnummer: WO 2012/042015

(56) Entgegenhaltungen:
- EP-A2- 0 711 995
- WO-A1-97/23159
- US-A- 4 695 157
- US-A- 4 868 383
- US-A- 5 241 459
- US-B1- 6 178 014
- US-B1- 6 710 329
- PRAKASH ET AL: "Cylindrical Integrating Cavity as Illumination Device for Scanners", IP.COM JOURNAL, IP.COM INC., WEST HENRIETTA, NY, US, 1. Januar 1993 (1993-01-01), XP013092009, ISSN: 1533-0001

## Beschreibung

Die vorliegende Erfindung betrifft Messeinrichtungen zur spektroskopischen Untersuchung von Proben und Vorrichtungen, welche eine derartige Messeinrichtung umfassen. Insbesondere betrifft die vorliegende Erfindung solche Messeinrichtungen und Vorrichtungen, mit welchen flächige Proben, beispielsweise Glasplatten, spektroskopisch untersucht werden können.

Durch spektroskopische Untersuchungen lassen sich zerstörungsfrei Information über eine Probe erhalten, beispielsweise Informationen, welche die Qualität einer Probe, beispielsweise eines Produkts, charakterisieren. Unter spektroskopischen Untersuchungen werden dabei allgemein Untersuchungen verstanden, bei welchen eine Probe mit Licht bestrahlt wird und das von der Probe reflektierte, gestreute, modifizierte und/oder transmittierte Licht ausgewertet wird. Beispiele für Vorrichtungen und Verfahren für derartige gattungsgemäße spektroskopische Untersuchungen sind in der DE 10324934 A1, der DE 2006015269 A1, der US 2005007828 A1 oder der WO 2009/109307 A1 offenbart.

In manchen Situationen ist es dabei wünschenswert, flächige, beispielsweise plattenförmige, Proben spektroskopisch zu untersuchen. Ein Beispiel für eine derartige Anwendung ist die Untersuchung von Glasflächen, beispielsweise die Untersuchung von Oberflächen von Glasflächen oder von Eigenschaften von Beschichtungen derartiger Glasflächen.

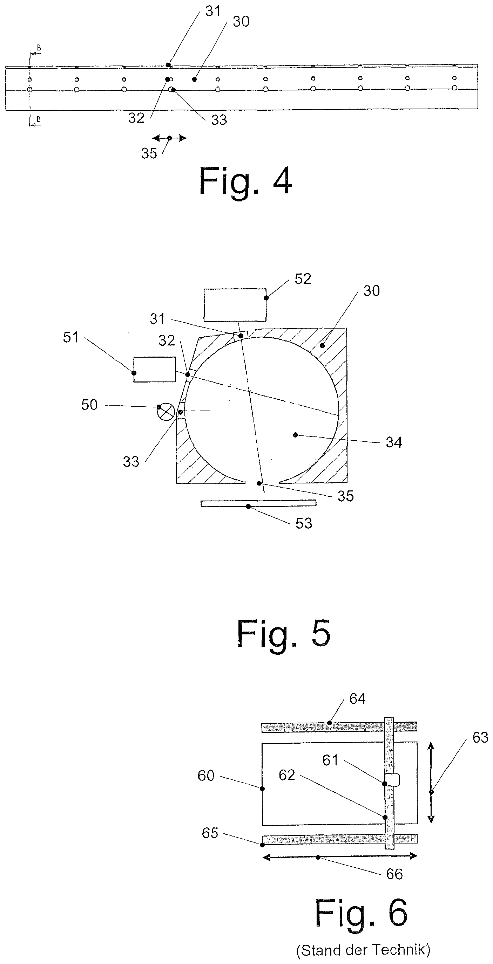

Eine erste herkömmliche Vorrichtung zur spektroskopischen Untersuchung derartiger Proben ist in Fig. 6 dargestellt. Bei der in Fig. 6 dargestellten Vorrichtung wird eine flächige Probe 60, beispielsweise eine Glasplatte, von einer spektroskopischen Messeinrichtung 61, welche beispielsweise eine Lichtquelle und ein Spektrometer aufweisen kann, untersucht. Um die Probe 60 abrastern zu können, ist die Messeinrichtung 61 an einer Traverse 62 angebracht, welche wiederum auf Traversen 64, 65 angebracht ist. Unter einer Traverse wird im Rahmen der vorliegenden Anmeldung dabei allgemein eine Einrichtung verstanden, mittels welcher ein an der Traverse angebrachtes Element entlang der Traverse bewegt werden kann. Derartige Traversen lassen sich beispielsweise mit Hilfe von Schienen, Ketten, Seilzügen, Elektromotoren und ähnlichen mechanischen bzw. elektromechanischen Komponenten realisieren.

Somit ist die Messeinrichtung 61 auf der Traverse 62, wie durch einen Pfeil 63 angedeutet, bewegbar, und die Traverse 62 ist auf den Traversen 64 und 65, wie durch einen Pfeil 66 angedeutet, bewegbar. Auf diese Weise kann die Messeinrichtung 61 über die gesamte Probe 60 bewegt werden, um Messwerte an verschiedenen Messpunkten aufzunehmen.

Die Anzahl von Messpunkten, welche dabei innerhalb einer vorgegebenen Zeit aufgenommen werden kann, hängt u. a. von der Zeit ab, die benötigt wird, die Messeinrichtung 61 zu den verschiedenen Messpunkten zu fahren. Wird eine Vorrichtung wie in Fig. 6, beispielsweise zur Überprüfung von industriell hergestellten Produkten 60 eingesetzt, ist es dabei wünschenswert, einen möglichst hohen Durchsatz zu erzielen, das heißt, eine benötigte Anzahl von Messpunkten auf der Probe 60 innerhalb möglichst kurzer Zeit aufzunehmen bzw. innerhalb einer vorgegebenen Zeit, welche beispielsweise durch eine Produktionsgeschwindigkeit bestimmt werden kann, möglichst viele Messpunkte aufzunehmen.

Bei der Vorrichtung der Fig. 6 ruht die Probe 60 in der Vorrichtung, beispielsweise wird sie nach der Produktion in die Vorrichtung gelegt. Zunehmend ist es jedoch wünschenswert, Proben durch eine derartige Messvorrichtung hindurch zu bewegen, so dass eine derartige Messvorrichtung dann beispielsweise "am Fließband" installiert sein kann. Diese Art der Messung wird auch als Inline-Messung bezeichnet.

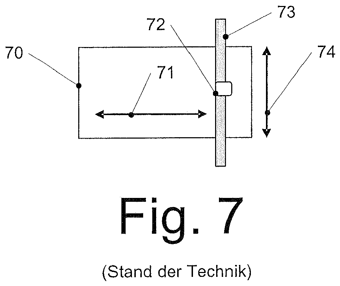

Ein Beispiel hierfür ist in Fig. 7 dargestellt. Bei der Vorrichtung der Fig. 7 bewegt sich eine Probe 70, welche beispielsweise wieder ein flächiges Produkt, wie eine Glasplatte sein kann, wie durch einen Pfeil 71 angedeutet, beispielsweise auf einem Transportband. Quer zu der Bewegungsrichtung der Probe 70 ist eine Traverse 73 bereitgestellt, an welcher eine Messeinrichtung 72 zur spektroskopischen Vermessung der Probe 70 angebracht ist. Über die Traverse 73 kann die Messvorrichtung 72, wie durch einen Pfeil 74 angedeutet, bewegt werden.

Die Anzahl der aufnehmbaren Messpunkte bei der Vorrichtung von Fig. 7 hängt zum einen von der Geschwindigkeit ab, mit welchem über die Traverse 73 die Probe 70 in Querrichtung "abgerastert" werden kann, zum anderen von der Geschwindigkeit der Probe 70. Mit zunehmenden Durchsätzen von industriellen Fertigungsanlagen sind dabei zunehmend höhere Probengeschwindigkeiten wünschenswert, was wiederum die Aufnahme einer hohen Zahl von Messpunkten mit einer Vorrichtung, wie in Fig. 7 dargestellt, erschwert.

Aus der US 4,695,157 ist eine Untersuchungsvorrichtung für gedruckte Leiterplatten bekannt, bei welchen eine Beleuchtung über einen dicken, lichtdurchlässigen, konkaven Diffusordom mit einer hohlen Kavität, welche der zu untersuchenden Oberfläche zugewandt ist, verwendet wird. Lampen richten eine Beleuchtung auf das Äußere des Doms, und Untersuchungsöffnungen zur Untersuchung mittels Videokamera sind um den Diffusordom herum beabstandet angeordnet.

Aus der US 4,868,383 ist eine lineare Lichtquelle für einen Filmscanner benutzt, welcher eine zylindrische Höhlung mit diffus reflektierenden Wänden benutzt, um einen intensiven Lichtstrahl zu erzeugen.

Aus der EP 0 711 995 A2 ist eine Infrarotlichtquelle unter Benutzung einer Kavität bekannt.

Die WO 97/23159 beschreibt eine Kavität zur spektroskopischen Messung von lichtstreuenden Proben, wobei die Proben in der Kavität angeordnet werden.

Dementsprechend ist es eine Aufgabe der vorliegenden Erfindung, Messeinrichtungen und Vorrichtungen bereitzustellen, welche eine spektroskopische Untersuchung insbesondere flächiger Proben mit einer erhöhten Anzahl von Messpunkten pro Zeit ermöglichen.

Diese Aufgabe wird gelöst durch eine Vorrichtung gemäß Anspruch 1. Die Unteransprüche definieren Ausführungsbeispiele der Vorrichtung.

Erfindungsgemäß wird eine Vorrichtung mit einer Messeinrichtung, mindestens einer Lichtquelle und mindestens einer Spektrometereinrichtung bereitgestellt, wobei die Messeinrichtung einen sich in einer Längsrichtung der Messeinrichtung länglich erstreckenden Hohlraum umfasst, wobei die Messeinrichtung mindestens eine erste einer Probe zuzuwendenden Öffnung, eine Vielzahl in der Längsrichtung angeordneter zweiter Öffnungen zum Erfassen von von der Probe ausgehendem und durch die erste Öffnung in den Hohlraum zurückreflektiertem Licht und mindestens eine dritte Öffnung zum Einkoppeln von Licht in den Hohlraum aufweist, wobei die ersten, zweiten und dritten Öffnungen mit dem Hohlraum verbunden sind,
wobei die mindestens eine Lichtquelle mit der mindestens einen dritten Öffnung gekoppelt ist, und
wobei die mindestens eine Spektrometereinrichtung mit der Vielzahl von zweiten Öffnungen gekoppelt ist.

Über die Vielzahl von zweiten Öffnungen kann bei einer derartigen Messeinrichtung eine Vielzahl von Messpunkten gleichzeitig erfasst werden.

Die mindestens eine erste Öffnung kann insbesondere einen sich in der Längsrichtung des Hohlraums erstreckenden Schlitz umfassen. Über diesen Schlitz wird dann das in den Hohlraum eingekoppelte Licht zur Probe geleitet, und das von der Probe ausgehende Licht gelangt durch den Schlitz zu der Vielzahl von zweiten Öffnungen. Der Schlitz kann sich dabei über im Wesentlichen die gesamte Länge der Messeinrichtung erstrecken, beispielsweise mindestens 50% der Länge, mindestens 75% der Länge oder mindestens 80% der Länge.

Die mindestens eine dritte Öffnung kann eine Vielzahl von dritten Öffnungen umfassen, wobei jeweils eine dritte Öffnung einer zweiten Öffnung zugeordnet sein kann.

Der Hohlraum kann eine Innenbeschichtung aufweisen, welche diffus reflektierende Materialien umfasst. Ein derartiger Hohlraum kann dann im Wesentlichen wie eine Ulbricht-Kugel wirken, wobei durch die Messeinrichtung gleichsam eine Vielzahl von separaten Ulbricht-Kugeln ersetzt werden kann.

Optional weist der Hohlraum abgesehen von den Öffnungen einen entlang seiner Längsrichtung gleichbleibenden Querschnitt auf. Die konkrete Form des Querschnitts ist dabei prinzipiell beliebig.

Der Hohlraum kann insbesondere im Wesentlichen zylinderförmig mit einem im Wesentlichen kreisförmigen Querschnitt senkrecht zu der Längsrichtung sein.

Die Messeinrichtung kann ein Mehrkanalspektrometer umfassen, welches mit der Vielzahl von zweiten Öffnungen, beispielsweise über eine Freistrahloptik oder über Lichtleitelemente wie Glasfasern, gekoppelt ist. Es sind jedoch auch separate Spektrometer für verschiedene zweite Öffnungen möglich.

Bei einem Ausführungsbeispiel einer erfindungsgemäßem Vorrichtung zur spektroskopischen Untersuchung ist eine Messeinrichtung wie oben beschrieben quer zu einer Längsrichtung der Probe angeordnet. Die Messeinrichtung kann beispielsweise auf Traversen angebracht sein, um die Messeinrichtung in einer Längsrichtung der Probe zu bewegen. Die Messeinrichtung kann auch starr angeordnet sein, und/oder die Probe kann in ihrer Längsrichtung beweglich angeordnet sein.

Mit einer derartigen Vorrichtung können insbesondere Glasplatten In-Line untersucht werden. Die Erfindung wird im folgenden anhand von Ausführungsbeispielen unter Bezugnahme auf die beigefügte Zeichnung näher erläutert. Es zeigen:
Fig. 1 eine Vorrichtung zur Untersuchung einer Probe gemäß einem Ausführungsbeispiel der Erfindung,
Fig. 2 eine Vorrichtung zur Untersuchung einer Probe gemäß einem weiteren Ausführungsbeispiel der Erfindung,
Fig. 3 eine Perspektivansicht eines Beispiels einer Messeinrichtung.
Fig. 4 eine Seitenansicht der Messeinrichtung der Fig. 3,
Fig. 5 eine Querschnittsansicht der Messeinrichtung der Fig. 3 und 4 entlang einer Linie B-B der
Fig. 4 mit zusätzlichen Elementen,
Fig.6 eine Vorrichtung gemäß dem Stand der Technik und
Fig. 7 eine Vorrichtung gemäß dem Stand der Technik.

Im folgenden werden Ausführungsbeispiele der Erfindung näher erläutert. Diese Ausführungsbeispiele dienen lediglich der Veranschaulichung der Erfindung und sind nicht als den Bereich der Erfindung einschränkend auszulegen. Insbesondere ist eine Beschreibung eines Ausführungsbeispiels mit einer Vielzahl von Merkmalen nicht dahingehend auszulegen, dass alle dieser Merkmale nötig zur Ausführung der Erfindung sind, da andere Ausführungsbeispiele weniger Merkmale und/oder alternative Merkmale aufweisen können. Merkmale verschiedener Ausführungsbeispiele können kombiniert werden, sofern nichts anderes angegeben ist.

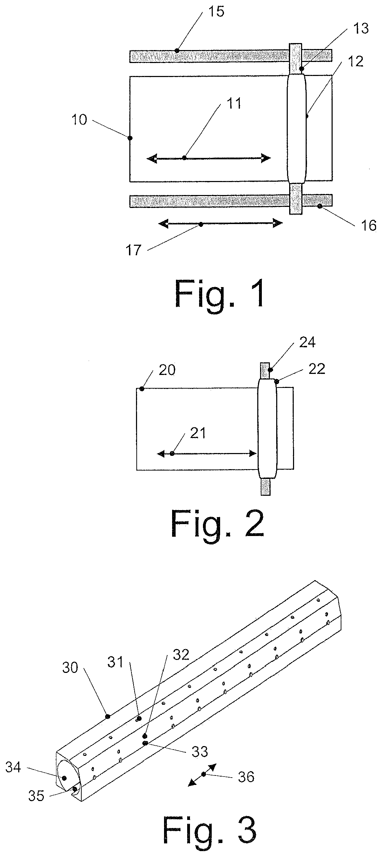

In Fig. 1 ist ein Ausführungsbeispiel einer erfindungsgemäßen Vorrichtung zur spektroskopischen Untersuchung einer Probe 10 dargestellt. Bei dem Ausführungsbeispiel der Fig. 1 ist ein Ausführungsbeispiel einer spektroskopischen Messeinrichtung 12 an einem Träger 13 derart montiert, dass die Messeinrichtung 12 die Probe 10 überspannt. Der Träger 13 ist an Traversen 15, 16 angebracht, was eine Bewegung des Trägers 13 und somit der Messeinrichtung 12 in einer Längsrichtung der Probe, welche im Wesentlichen senkrecht zu der Richtung der Trägers 13 ist, wie durch einen Pfeil 17 angedeutet, ermöglicht.

Die Messeinrichtung 12 weist, wie später unter Bezugnahme auf die Fig. 3 bis 5 näher erläutert werden wird, eine Vielzahl von Messöffnungen in ihrer Längsrichtung, d.h. in Richtung des Trägers 13, versetzt auf, sodass eine Vielzahl von Messpunkten gleichzeitig aufgenommen werden kann. Somit ist verglichen mit dem in Fig. 6 oder 7 dargestellten Stand der Technik keine Bewegung der Messeinrichtung 12 entlang des Trägers 13 nötig.

Die Probe 10 kann eine ruhende Probe sein. In diesem Fall dient die Bewegung auf den Traversen 15, 16 zur Abrasterung der Probe in Richtung der Traversen 15, 16. Die Traversen 15, 16 können dabei jede geeignete Art von Mittel enthalten, den Träger 13 zu bewegen, beispielsweise Bänder, Ketten, Räder und dergleichen. Bei anderen Ausführungsbeispielen kann die Probe 10, wie durch einen Pfeil 11 angedeutet, in Längsrichtung der Probe, d.h. im Wesentlichen senkrecht zu dem Träger 13, beweglich sein. In diesem Fall kann eine Bewegung des Trägers 13 auf den Traversen 15, 16 dazu dienen, eine Relativgeschwindigkeit zwischen der Messeinrichtung 12 und der Probe 10 verglichen mit einer Geschwindigkeit der Probe 10 zu verringern, um eine Aufnahme von mehr Messpunkten in Bewegungsrichtung der Probe 10 zu vereinfachen. Dadurch wird die Messgenauigkeit erhöht. Die Bewegung des Trägers 13 kann beispielsweise von einer Steuereinheit zyklisch auf eine vorgegebene Relativgeschwindigkeit zur Probe 10 geregelt werden. Insbesondere kann die Relativgeschwindigkeit zum Messen auf Null geregelt werden, so dass die Messeinrichtung 12 vorübergehend stationär über einem Messpunkt steht.

Bei anderen Ausführungsbeispielen sind, wenn eine zu untersuchende Probe sich bewegt, beispielsweise wenn die Probe auf einem Transportband oder einer anderen Fördereinrichtung angebracht ist, keine Traversen oder andere Mittel zur Bewegung der Messeinrichtung nötig. Ein derartiges Ausführungsbeispiel ist in Fig. 2 dargestellt.

Bei dem Ausführungsbeispiel von Fig. 2 bewegt sich eine Probe 20, insbesondere eine flächige Probe wie eine Glasplatte, in eine Bewegungsrichtung wie durch einen Pfeil 21 angedeutet. Quer zu der Bewegungsrichtung ist ein Träger 24 bereitgestellt, an welchem eine Messeinrichtung 22 angebracht ist. Wie die Messeinrichtung 12 der Fig. 1 weist die Messeinrichtung 22 eine Vielzahl von Messöffnungen auf, welche die Aufnahme von Messpunkten, d.h. ein Erfassen und Analysieren von von der Probe 20 ausgehendem Licht, an einer Vielzahl von Orten senkrecht zu der Bewegungsrichtung der Probe 20 simultan ermöglichen.

Geeignete Messeinrichtungen werden im folgenden unter Bezugnahme auf die Fig. 3 bis 5 erläutert.

Grundsätzlich wäre es möglich, eine geeignete Messeinrichtung mit Hilfe einer Vielzahl von in Reihe angeordneter Ulbricht-Kugeln zu realisieren. Es könnten auch zwei oder mehr Reihen zueinander versetzte Ulbricht-Kugel verwendet werden. Bei einer derartigen Messeinrichtung kann jede Ulbricht-Kugel beispielsweise mit einer Öffnung zum Einkoppeln von Anregungslicht in die Ulbricht-Kugel, einer Öffnung zum Erfassen von von der Probe ausgehendem Licht und einer Öffnung, über welche das in die Ulbricht-Kugel eingekoppelte Anregungslicht nach Reflexionen an der Innenwand zu der Probe gelangt bzw. durch welche von der Probe ausgehendes Licht hindurch zu der Öffnung zum Erfassen des Lichtes gelangt, aufweisen.

Bei einer derartigen Anordnung ist jedoch die Anzahl der möglichen Messpunkte entsprechend der Anzahl von Ulbricht-Kugeln durch eine mögliche minimale Größe der Ulbricht-Kugeln sowie ggf. nötige Stege zwischen den Ulbricht-Kugeln beschränkt. Bei einer zunehmenden Verkleinerung der Ulbricht-Kugeln stellt sich dabei insbesondere das Problem, dass die oben erwähnten Öffnungen einen zunehmend großen Anteil der Kugeloberfläche ausmacht, was der Wirkungsweise der Ulbricht-Kugel abträglich ist.

Bei den Messeinrichtungen ist ein sich in Längsrichtung erstreckender Hohlraum bereitgestellt, welcher u.a. eine Vielzahl von Messöffnungen, d.h. eine Vielzahl von Öffnungen zum Erfassen von von der Probe ausgehendem Licht aufweist. Ein Ausführungsbeispiel einer derartigen Messeinrichtung ist den Fig. 3 bis 5 dargestellt. Dabei zeigt Fig. 3 eine Perspektivansicht eines Ausführungsbeispiels der Messeinrichtung, Fig. 4 zeigt eine Seitenansicht des Ausführungsbeispiels der Fig. 3 und Fig.5 zeigt eine Querschnittsansicht entlang einer Linie B-B aus Fig. 4, wobei in Fig. 5 noch zusätzliche Elemente dargestellt sind. Die Messeinrichtung der Fig. 3 bis 5 kann beispielsweise in den Vorrichtungen der Fig. 1 oder 2 und verwendet werden, kann jedoch auch unabhängig hiervon verwendet werden.

Die in den Fig. 3 bis 5 dargestellte Messeinrichtung 30 weist einen näherungsweise zylinderförmigen Hohlraum 34 auf, welcher sich in eine Längsrichtung der Messeinrichtung 30 erstreckt, wobei die Längseinrichtung durch einen Pfeil 36 in Fig. 3 und 4 dargestellt ist. Wie insbesondere in Fig. 5 zu sehen, ist der Querschnitt des zylinderförmigen Hohlraums näherungsweise kreisförmig.

In alternativen Ausführungsformen (nicht abgebildet) kann der Querschnitt elliptisch mit zwei unterschiedlichen Radien sein. Allgemeiner kann er die Form eines beliebigen Kegelschnittes aufweisen. Alternativ kann er beispielsweise vieleckig, insbesondere rechteckig sein.

Der zylinderförmige Hohlraum 34 weist bei dem Ausführungsbeispiel der Fig. 3 einen Schlitz 35 auf, welcher sich im Wesentlichen über die gesamte Länge des Zylinders erstreckt und bei Benutzung der Messeinrichtung einer Probe wie beispielsweise einer in Fig. 5 dargestellten Probe 53 zugewandt ist.

Neben dem Schlitz 35, welcher eine erste Öffnung darstellt, sind eine Vielzahl von zweiten Öffnungen 31, eine Vielzahl von dritten Öffnungen 33 und eine Vielzahl von vierten Öffnungen 32 bereitgestellt. Die zweiten Öffnungen 31, die dritten Öffnungen 33 und die vierten Öffnungen 32 sind bei dem dargestellten Ausführungsbeispielen in regelmäßigen Abständen in der Längsrichtung 36 angeordnet, wobei bei dem dargestellten Ausführungsbeispiel jeweils eine der zweiten Öffnungen 32, der dritten Öffnungen 33 und der vierten Öffnungen 32 auf einem gemeinsamen Querschnitt senkrecht zur Längsrichtung angeordnet sind.

Die Funktion der verschiedenen Öffnungen ist am Besten aus der Querschnittsansicht der Fig. 5 ersichtlich.

Die ersten Öffnungen 31 sind derart angeordnet, dass von der einen Probe wie beispielsweise der Probe 53 ausgehendes Licht ohne Reflexion in dem Hohlraum 34 zu den ersten Öffnungen 31 gelangen kann. Die ersten Öffnungen 31 dienen somit als Messöffnungen zum Erfassen von von der Probe 53 ausgehendem Licht. Zum Analysieren dieses Lichts kann beispielsweise eine Spektrometeranordnung 52 mit den ersten Öffnungen 31 gekoppelt sein. Die Kopplung kann dabei über eine Freistrahloptik, beispielsweise eine Zylinderoptik, oder auch über Lichtleitelemente wie Glasfasern erfolgen.

Bei einem Ausführungsbeispiel kann ein gemeinsames Mehrkanalspektrometer für alle Messöffnungen vorgesehen sein, wobei beispielsweise jeder Messöffnung ein Kanal des Mehrkanalspektrometers zugeordnet ist. Bei anderen Ausführungsbeispielen können separate Spektrometer für verschiedene Messöffnungen vorgesehen sein.

Die zweiten Öffnungen 33 dienen zur Einkopplung von Licht in den Hohlraum 34, beispielsweise von einer Lichtquelle 50 ausgehendem Licht. Die Lichtquelle 50 kann beispielsweise eine Laserlichtquelle, eine Weißlichtquelle, eine Gasentladungslampe, eine Leuchtdiodenanordnung oder jede andere geeignete Lichtquelle sein. Es kann für jede der Öffnungen 33 eine separate Lichtquelle bereitgestellt sein, es ist jedoch ebenso möglich, eine einzige Lichtquelle zu verwenden und das Licht dieser Lichtquelle beispielsweise mit einer Freistrahloptik oder mit Lichtleitern zu den jeweiligen Öffnungen 33 zu lenken. Die Innenwände des Hohlraums 34 sind bevorzugt mit diffus reflektierendem Materialen, beispielsweise Materialien, wie sie auch für UI-bricht-Kugeln verwendet werden, ausgekleidet, so dass das durch die Öffnung 33 eingekoppelte Licht nach mehreren Reflexionen als diffus reflektiertes Licht aus der Öffnung 35 austritt und auf die Probe 53 fällt, beispielsweise um diese anzuregen. Die Antwort auf die Anregung kann dann wie bereits beschrieben über die ersten Öffnungen 31 beispielsweise mit der Spektrometeranordnung 52 detektiert werden.

Die vierten Öffnungen 32 dienen zur Beobachtung einer Referenz, d.h. mit ihnen kann von der Wand des Hohlraums 34 reflektiertes Licht beispielsweise mit einer Detektoranordnung 51 detektiert werden. Die Detektoranordnung 51 kann eine Spektrometeranordnung aufweisen, sie kann jedoch beispielsweise auch ein einfacher Detektor zum Detektieren der jeweiligen Intensität sein. Wiederum können mehrere Detektoreinrichtungen 51, beispielsweise eine Detektoreinrichtung für jede Öffnung 32, vorgesehen sein, oder es kann beispielsweise ein Mehrkanaldetektor für alle oder mehrere der Öffnungen 32 vorgesehen sein.

Es ist zu bemerken, dass die Messeinrichtung der Fig. 3 bis 5 lediglich als Beispiel zu verstehen ist und verschieden Variationen möglich sind. Beispielsweise können statt des Schlitzes 35 auch eine Vielzahl einzelner Öffnungen vorgesehen sein. Die Öffnungen 31, 32 und 33 müssen nicht äquidistant entlang der Längsrichtung 36 angeordnet sein, sondern es ist auch eine Anordnung mit variablem Abstand möglich, beispielsweise eine höhere Dichte von Öffnungen am Rand der Messeinrichtung, falls eine Probe wie die Probe 10 der Fig. 1 oder die Probe 20 der Fig. 2 am Rand mit mehr Messpunkten vermessen werden soll, oder eine höhere Dichte von Öffnungen in der Mitte der Messeinrichtung, falls in der Mitte mehr Messpunkte aufgenommen werden sollen. Auch ist es beispielsweise möglich, die Öffnungen 31, 32, und 33 nicht jeweils an einem gleichem Querschnitt, sondern in Längsrichtung 36 versetzt zu einander anzuordnen. Die Anzahl der Öffnungen 31, 32 und 33 muss nicht wie in dem dargestellten Ausführungsbeispiel übereinstimmen. Es können beispielsweise auch weniger dritte Öffnungen 33 zum Einkoppeln von Licht als Öffnungen 31 und/oder weniger vierte Öffnungen 32 zur Aufnahme einer Referenz als Öffnungen 31 bereitgestellt sein.

Die Messeinrichtungen können je nach Bedarf für verschiedene Arten spektroskopischer Messungen ausgestaltet sein.

Zudem können die Messeinrichtungen sowohl für Transmission als auch für Reflexionsmessungen ausgestaltet sein.

Die in den Fig. 3 bis 5 dargestellte Messeinrichtung kann beispielsweise für eine Farbmessung verwendet werden, wobei das Spektrum des von der Probe zurückgeworfenen Lichts analysiert wird. Die Beobachtung kann dabei beispielsweise unter 0° oder unter 8° erfolgen.

Bei anderen Ausführungsbeispielen können Messeinrichtungen zur Weißlichtinterferometrie, beispielsweise für eine Schichtdicktenmessung, eingerichtet sein. Die Weißlichtinterferometrie ist ein Verfahren, welches die Interferenz breitbandigen Lichts, insbesondere Weißlichts, ausnutzt, wobei die Form des Signals von der mittleren Wellenlänge, dem Spektrum und die Kohärenzlänge der verwendeten Lichtquelle abhängt.

Bei anderen Ausführungsbeispielen können die Messeinrichtungen für zeitaufgelöste Spektroskopie eingerichtet werden, das heißt, der zeitliche Verlauf des aufgenommenen Signals wird untersucht.

Bei wieder anderen Ausführungsbeispielen können die Messeinrichtungen zur Durchführung von Ellipsometriemessungen eingerichtet sein. Bei der Ellipsometrie wird die Änderung eines Polarisationszustandes von Licht bei Reflexion oder Transmission an einer Probe bestimmt. Dabei wird beispielsweise linear oder zirkular polarisiertes Licht auf die Probe gestrahlt, welches nach Reflexion oder Transmission im Allgemeinen elliptisch polarisiert ist. Die Änderung des Polarisationszustandes kann dabei im einfachsten Fall durch das komplexe Verhältnis p von Reflexionskoeffizienten rₛ und rₚ beschrieben werden, wobei rₛ ein Reflexionskoeffizient für senkrecht zur Einfallsebene polarisiertes Licht ist und rₚ ein Reflexionskoeffizient für parallel zur Einfallsebene polarisiertes Licht ist. Durch Ellipsometriemessungen können beispielsweise Brechungsindices auch von Mehrschichtsystemen bestimmt werden, wodurch auf einen Schichtaufbau, insbesondere auf Schichtdicken, zurückgeschlossen werden kann. Im Vergleich zu einer reinen Reflexionsmessung ist dabei keine Referenzmessung notwendig, da generell Intensitätsverhältnisse (statt absoluter Intensitäten) bestimmt werden. Aus diesem Grund ist auch die Anfälligkeit gegenüber Intensitätsschwankungen einer verwendeten Lichtquelle relativ gering. Zudem werden bei der Ellipsometrie immer mindestens zwei Parameter in einer Messung bestimmt.

Bei wieder anderen Ausführungsbeispielen können die Messeinrichtungen zur Messung von Streulicht eingerichtet sein.

Bei anderen Ausführungsbeispielen können statt Spektrometern oder zusätzlich zu diesen Kameras und Bildverarbeitungssysteme in den Messeinrichtungen enthalten sein, wobei aufgenommene Bilder beispielsweise analysiert werden, um Fehlstellen zu finden. Dabei kann für die Kamera(s) optional eine separate Lichtquelle zur Beleuchtung der Probe mit anderen Wellenlängen angeordnet sein.

Bei anderen Ausführungsbeispielen sind die Messeinrichtungen eingerichtet, um Fehlstellen, beispielsweise in Glasproben, zu detektieren.

Bei anderen Ausführungsbeispielen, kann eine Messeinrichtung ausgestaltet sein, Oberflächeneigenschaften bzw. Materialeigenschaften mittels Fluoreszenzspektroskopie zu vermessen.

Somit ist die Erfindung nicht auf die dargestellten Ausführungsbeispiele beschränkt.

## Patentansprüche

1. Vorrichtung zur spektroskopischen Untersuchung von Proben, umfassend:
eine Messeinrichtung (30), mindestens eine Lichtquelle (50) und mindestens eine Spektrometereinrichtung (52),
wobei die Messeinrichtung (30) einen sich in einer Längsrichtung (36) der Messeinrichtung (30) länglich erstreckenden Hohlraum (34) aufweist, wobei der Hohlraum (34) umfasst:
mindestens eine einer Probe (53) zuzuwendende erste Öffnung,
eine Vielzahl von in der Längsrichtung (36) angeordneten zweiten Öffnungen (31) zum Erfassen von von der Probe (53) ausgehendem und durch die erste Öffnung in den Hohlraum zurückreflektiertem Licht, und
mindestens eine dritte Öffnung (33) zum Einkoppeln von Licht in den Hohlraum,
wobei die mindestens eine erste Öffnung, die Vielzahl von in der Längsrichtung angeordneten zweiten Öffnungen (31) und die mindestens eine dritte Öffnung (33) mit dem Hohlraum verbunden sind,
wobei die mindestens eine Lichtquelle (50) mit der mindestens einen dritten Öffnung (33) gekoppelt ist, und
wobei die mindestens eine Spektrometereinrichtung (52), mit der Vielzahl von zweiten Öffnungen (31) gekoppelt ist.

2. Vorrichtung gemäß Anspruch 1, wobei die mindestens eine erste Öffnung (35) ein sich in der Längsrichtung (36) erstreckender Schlitz ist.

3. Vorrichtung nach Anspruch 1 oder 2, wobei der Hohlraum (34) im Wesentlichen zylinderförmig mit kreisförmigem Querschnitt ist.

4. Vorrichtung nach einem der Ansprüche 1 bis 3, wobei die mindestens eine dritte Öffnung eine Vielzahl von dritten Öffnungen (33) umfasst.

5. Vorrichtung nach Anspruch 4, wobei eine Anzahl der dritten Öffnungen (33) einer Anzahl der zweiten Öffnungen (31) entspricht.

6. Vorrichtung nach einem der Ansprüche 1 bis 5, wobei der Hohlraum weiterhin mindestens eine mit dem Hohlraum verbundene vierte Öffnung (32) zum Aufnehmen einer Referenz aufweist.

7. Vorrichtung nach Anspruch 6, wobei die mindestens eine vierte Öffnung eine Vielzahl von vierten Öffnungen (32) umfasst, wobei eine Anzahl der vierten Öffnungen (32) einer Anzahl der zweiten Öffnungen (31) entspricht.

8. Vorrichtung nach Anspruch 6 oder 7, weiter umfassend mindestens einen Detektor (51), welcher mit der mindestens einen vierten Öffnung (32) gekoppelt ist.

9. Vorrichtung nach einem der Ansprüche 1-8, wobei die Spektrometereinrichtung (52) ein Mehrkanalspektrometer umfasst.

10. Vorrichtung nach einem der Ansprüche 1-9, wobei die Spektrometereinrichtung (52) über eine Freistrahloptik mit der Vielzahl von zweiten Öffnungen (31) gekoppelt ist.

11. Vorrichtung nach einem der Ansprüche 1-9, wobei die Spektrometereinrichtung (52) über eine Faseroptik mit der Vielzahl von zweiten Öffnungen (31) gekoppelt ist.

12. Vorrichtung nach einem der Ansprüche 1-11-, wobei die Probe eine Längsrichtung und eine Querrichtung aufweist, umfassend:
einen in Querrichtung der Probe (10) angeordneten Träger (13; 24), und
wobei die Messeinrichtung (12; 22) an dem Träger (13; 24) angebracht ist.

13. Vorrichtung nach Anspruch 12, weiterhin umfassend Mittel (15, 16) zum Bewegen des Trägers (13) in Längsrichtung der Probe (10).

14. Vorrichtung nach einem der Ansprüche 12 oder 13, wobei die Vorrichtung zur spektroskopischen Vermessung einer sich in der Längsrichtung der Probe (10; 20) bewegenden Probe eingerichtet ist.

## Claims

1. Apparatus for spectroscopic examination of samples, comprising:
a measurement device (30), at least one light source (50) and at least one spectrometer device (52),
wherein the measurement device (30) comprises a cavity (34) extending in a longitudinal direction (36) of the measurement device (30) in a longitudinally extending manner, wherein the measurement device (30) comprises:
at least one first opening (35) to face a sample (53),
a plurality of second openings (31) arranged in the longitudinal direction (36) to capture light emitted from the sample (53) and reflected back into the cavity through the first opening,
and
at least one third opening (33) to couple light into the cavity,
wherein the at least one first opening, the plurality of second openings (31) arranged in the longitudinal direction and the at least one third opening (33) are connected with the cavity, wherein the at least one light source (50) is coupled with the at least one third opening (33), and wherein the at least one spectrometer device (52) is coupled with the plurality of second openings (31).

2. Apparatus of claim 1, wherein the at least one first opening (35) is a slit extending in the longitudinal direction (36).

3. Apparatus of claim 1 or 2, wherein the cavity (34) is essentially cylindrical with circular cross-section.

4. Apparatus of any of claims 1 to 3, wherein the at least one third opening comprises a plurality of third openings (33).

5. Apparatus of claim 4, wherein a number of third openings (33) corresponds to a number of second openings (31).

6. Apparatus of any one of claims 1 to 5, wherein the cavity includes at least one fourth opening (32), which is connected with the cavity, to capture a reference.

7. Apparatus of claim 6, wherein the at least one fourth opening comprises a plurality of fourth openings (32), wherein a number of fourth openings (32) corresponds to a number of second openings (31).

8. Apparatus of claim 6 or 7, further comprising at least one detector (51) coupled with the at least one fourth opening (32).

9. Apparatus of one of claims 1 to 8, wherein the spectrometer device (52) comprises a multichannel spectrometer.

10. Apparatus of any one of claims 1 to 9, wherein the spectrometer device (52) is coupled with the plurality of second openings (31) via a free beam optic.

11. Apparatus of any one of claims 1 to 9, wherein the spectrometer device (52) is coupled to the plurality of second openings (31) via a fiber optic.

12. Apparatus of any one of claims 1 to 11, wherein the sample has a longitudinal direction and a transverse direction, comprising:
a carrier (13; 24) arranged in the transversal direction of the sample (10), and
wherein the measurement device (12; 22) is mounted to the carrier (13; 24).

13. Apparatus of claim 12, further comprising means (15, 16) for moving the carrier (13) in longitudinal direction of the sample (10).

14. Apparatus of one of claims 12 or 13, wherein the apparatus is configured for spectroscopic measurement of a sample moving in the longitudinal direction of the sample (10; 20).

## Revendications

1. Dispositif servant à examiner par spectroscopie des échantillons, comprenant :
un système de mesure (30), au moins une source de lumière (50) et au moins un système spectromètre (52),
dans lequel le système de mesure (30) présente un espace creux (34) s'étendant en longueur dans un sens longitudinal (36) du système de mesure (30), dans lequel le système de mesure (30) comprend :
au moins une première ouverture (35) à tourner vers l'échantillon (53),
une pluralité de deuxièmes ouvertures (31) disposées dans le sens longitudinal (36), servant à détecter de la lumière sortant de l'échantillon (53) et réfléchie de manière à revenir en passant par la première ouverture dans l'espace creux, et
au moins une troisième ouverture (33) servant à injecter de la lumière dans l'espace creux,
dans lequel l'au moins une première ouverture, la pluralité de deuxièmes ouvertures (31) disposées dans le sens longitudinal et l'au moins une troisième ouverture (33) sont reliées à l'espace creux,
dans lequel l'au moins une source de lumière (50) est couplée à l'au moins une troisième ouverture (33), et
dans lequel l'au moins un système spectromètre (52) est couplé à la pluralité de deuxièmes ouvertures (31).

2. Dispositif selon la revendication 1, dans lequel l'au moins une première ouverture (35) est une entaille s'étendant dans le sens longitudinal (36).

3. Dispositif selon la revendication 1 ou 2, dans lequel l'espace creux (34) est sensiblement de forme cylindrique avec une section transversale de forme circulaire.

4. Dispositif selon l'une quelconque des revendications 1 à 3, dans lequel l'au moins une troisième ouverture comprend une pluralité de troisièmes ouvertures (33).

5. Dispositif selon la revendication 4, dans lequel un nombre donné des troisièmes ouvertures (33) correspond à un nombre donné des deuxièmes ouvertures (31).

6. Dispositif selon l'une quelconque des revendications 1 à 5, dans lequel l'espace creux présente par ailleurs au moins une quatrième ouverture (32), reliée à l'espace creux, servant à recevoir une référence.

7. Dispositif selon la revendication 6, dans lequel l'au moins une quatrième ouverture comprend une pluralité de quatrièmes ouvertures (32), dans lequel un nombre donné des quatrièmes ouvertures (32) correspond à un nombre donné des deuxièmes ouvertures (31).

8. Dispositif selon la revendication 6 ou 7, comprenant en outre au moins un détecteur (51), qui est couplé à l'au moins une quatrième ouverture (32).

9. Dispositif selon l'une quelconque des revendications 1 - 8, dans lequel le système spectromètre (52) comprend un spectromètre à canaux multiples.

10. Dispositif selon l'une quelconque des revendications 1 - 9, dans lequel le système spectromètre (52) est couplé, par l'intermédiaire d'une optique à rayonnement libre, à la pluralité de deuxièmes ouvertures (31).

11. Dispositif selon l'une quelconque des revendications 1 - 9, dans lequel le système spectromètre (52) est couplé, par l'intermédiaire d'une fibre optique, à la pluralité de deuxièmes ouvertures (31).

12. Dispositif selon l'une quelconque des revendications 1 - 11, dans lequel l'échantillon présente un sens longitudinal et un sens transversal, comprenant :
un support (13 ; 24) disposé dans le sens transversal de l'échantillon (10), et
dans lequel le système de mesure (12 ; 22) est installé au niveau du support (13 ; 24).

13. Dispositif selon la revendication 12, comprenant par ailleurs des moyens (15, 16) servant à déplacer le support (13) dans le sens longitudinal de l'échantillon (10).

14. Dispositif selon l'une quelconque des revendications 12 ou 13, dans lequel le dispositif est mis au point afin de mesurer par spectrométrie un échantillon se déplaçant dans le sens longitudinal de l'échantillon (10 ; 20).
